Europäisches Patentamt

European Patent Office

Office européen des brevets

(19)

(11) Numéro de publication: **0 213 007**
**B1**

(12) **FASCICULE DE BREVET EUROPEEN**

(45) Date de publication du fascicule du brevet: **30.05.90**

(21) Numéro de dépôt: **86401515.1**

(22) Date de dépôt: **08.07.86**

(51) Int. Cl.⁵: **A 21 D 8/02,** A 21 D 10/00, A 21 D 2/08

(54) Procédé de fabrication d'un pain de mie préemballé de longue conservation.

(30) Priorité: **19.07.85 FR 8511107**

(43) Date de publication de la demande:
**04.03.87 Bulletin 87/10**

(45) Mention de la délivrance du brevet:
**30.05.90 Bulletin 90/22**

(84) Etats contractants désignés:
**AT BE CH DE GB IT LI LU NL SE**

(56) Documents cités:
**EP-A-0 115 108**
**FR-A- 585 754**
**GB-A-1 538 360**
**GB-A-1 584 404**

(73) Titulaire: **Cantenot, François**
**Saint-Usage**
**F-21170 St-Jean-de-Losne (FR)**

(72) Inventeur: **Cantenot, François**
**Saint-Usage**
**F-21170 St-Jean-de-Losne (FR)**

(74) Mandataire: **Bruder, Michel**
**10 rue de la Pépinière**
**F-75008 Paris (FR)**

Courier Press, Leamington Spa, England.

EP 0 213 007 B1

**EP 0 213 007 B1**

**Description**

La présente invention concerne un procédé de fabrication d'un pain de mie préemballé de longue conservation.

Sur le marché des pains prétranchés et préemballés il existe deux grandes familles de produits:

1) les pains de courte conservation: il sont fabriqués d'une manière classique, comme le boulanger le ferait. Il est ajouté, au moment du pétrissage, un conservateur chimique, à savoir le propionate de calcium, qui lui permet de se conserver 15 jours environ. Compte tenu de la méthode de distribution le consommateur dispose de ce produit en grandes surfaces cinq jours environ après sa fabrication et il bénéficie donc d'un produit non rassis et très moelleux.

2) les pains de longue conservation (3 mois sans utilisation d'un conservateur chimique). Pour la fabrication de tels pains de mie de longue conservation il est connu d'utiliser la méthode français classique de panification comprenant les phases successives suivantes: incorporation des différents ingrédients à savoir farine, eau, levure, sucre, sel, adjuvant dans le pétrin; pétrissage; divisage ou pesage des pâtons; boulage; 1ère fermentation; façonnage; mise en moules; fermentation finale; cuisson et démoulage. Les pains de mie ainsi obtenus sont refroidis sur chariots, tranchés, transférés par un robot de manipulation sur une thermo-formeuse qui, ayant posé le couvercle de fermeture, effectue un vide relatif et un scellage étanche. Les pains sont alors acheminés dans un four infrarouge où ils passent 10 à 12 min. Après avoir été refroidis pendant environ 30 min, ils sont conditionnés dans des caisses américaines. La distribution de ces pains s'effectue traditionnellement par un circuit long passant par les dépôts de grossistes ou de succursalistes qui les livrent eux-mêmes à leurs détaillants ou à leurs succursales. Il en résulte que le consommateur trouve en magasin ce produit au plus tôt 3 semaines et couramment 4, 5, voir 6 semaines après sa fabrication. Il n'est pas moisi mais le raississement qui, jusqu'à maintenant, n'a pas pu être évité, fait que le consommateur achète un pain trop ferme.

Il est également connu d'utiliser, pour la fabrication du pain, du glutén, un émulsifiant et des mono-diglycérides, ainsi qu'il est décrit dans le brevet GB—A—1 584 404.

La présente invention vise à remédier à ces inconvénients en procurant un procédé permettant d'obtenir un pain de mie de longue conservation tout à fait comparable, du point de vue moelleux, au pain de mie de courte conservation et ce sans emploi de conservateur chimique, mais pour une durée de 35 à 45 jours.

A cet effet ce procédé de fabrication d'un pain de mie préemballé de longue conservation dans lequel on utilise le procédé américain de panification appelé "sponge-dough" dans lequel on part d'un mélange comprenant principalement de la farine, de l'eau, de la levure, du sucre, du sel, des matières grasses et on procède à deux pétrissages successifs séparés par un temps de repos de la pâte de plusieurs heures, est caractérisé en ce qu'on ajoute au mélange de départ, avant ou au cours de la première phase de pétrissage, du gluten, et un émulsifiant puis on ajoute à la pâte, au cours de la seconde phase de pétrissage, on monoglycéride.

Dans le procédé suivant l'invention on incorpore dans la farine, avant ou au cours de la première phase de pétrissage, du gluten qui joue un rôle de correcteur et de stabilisateur de la farine. En effet les farines françaises ont un taux de protéines inférieur à celui des farines américaines et l'adjonction de gluten permet de compenser ce taux de protéines inférieur. Le gluten assure ainsi l'obtention du réseau protéique viscoélastique nécessaire à l'obtention du pain de la qualité souhaitée. En outre l'ajout de gluten permet d'augmenter très sensiblement le pourcentage d'hydratation donc d'améliorer le rendement et de diminuer le pourcentage de matières grasses nécessaires.

L'émulsifiant qui est incorporé, dans le procédé suivant l'invention, avant ou au cours du premier pétrissage, permet de freiner notablement la vitesse de raffermissement de la mie au cours du temps en complexant l'amidon dès le premier temps de repos entre les deux pétrissages. Son association avec les matières grasses a un rôle déterminant sur la finesse et la régularité de la texture de la mie du produit obtenu. En effet les matières grasses qui se trouvent très finement dispersées dans la pâte, confèrent à celle-ci une large tolérance au cours de la fermentation.

L'ajout d'un monoglycéride au cours du second pétrissage s'est révélé être, dans le temps, un remarquable agent inhibiteur de la rétrogradation de l'amidon de par son action sur l'amylose.

L'utilisation, en combinaison, d'un émulsifiant avant ou au cours du premier pétrissage et d'un monoglycéride au cours du second pétrissage rend la mie plus souple et ralentit son durcissement. Le monoglycéride, agissant en tant que complexant de l'amylose, pénètre partiellement à l'intérieur des hélices que forme l'amidon après cuisson, et gène leur arrangement en zone cristalline, d'où un ralentissement du rassissement.

On donnera ci-dessous, à titre illustratif un exemple de mise en oeuvre du procédé suivant l'invention mettant en oeuvre le procédé américain de panification "sponge-dough", adapté pour l'obtention d'un pain de mie de longue conservation.

2

La formule du mélange utilisé est la suivante:

| | |
|---|---|
| Farine | 100 kg |
| Gluten | 4 à 5 kg |
| Eau | 60 à 65 l |
| Levure | 3,5 à 5 kg |
| Saccharose | 6 à 7 kg |
| Mat. Grasses | 3 kg |
| Sel | 2 kg |
| Emulsifiant | 1 à 2kg |
| Monoglycéride ._- | 1 à 2kg |
| Lactosérum | env. 3 kg |
| Acide ascorbique | 0,0015 à 0,030 kg |

Avant le premier pétrissage on part d'un mélange comprenant de 60 à 70% du poids de la farine, du gluten et de l'eau, et la totalité de la levure et de l'émulsifiant. On pétrit ce mélange pendant une durée d'environ 6 min avec une température de la pâte de l'ordre de 24°C. On laisse ensuite reposer la pâte dans des bacs, pendant une période allant de 3h30 à 4h30, dans la salle de panification, à une température d'environ 25°C. On reprend ensuite la pâte dans le pétrin et on lui ajoute le reste des constituants de la formule sauf le sel qui est incorporé en fin de pétrissage pour ne pas ralentir l'activité de la levure. La durée de ce second pétrissage est de 6 à 8 min et la température de la pâte est d'environ 26 à 28°C.

On laisse ensuite la pâte reposer en cuve pendant une période de 10 à 12 min, on procède ensuite au divisage, au pesage et au boulage. On place ensuite la pâte mise en boule dans une chambre, de préfermentation dans laquelle on la laisse pendant 10 min à une température de 30°C et avec un taux d'humidité de 80 à 85%. On façonne la pâte préfermentée, on la met en moule et on la fait passer dans une étuve finale pendant une période de 45 à 55 min, à une température de 37 à 40°C et avec en taux d'humidité de 80 à 85%. On procède ensuite à la cuisson dans un four pendant 20 mn environ à une température allant de 220 à 240°C et on démoule.

Dans l'exemple susmentionné on a utilisé, comme émulsifiant, celui connu sous le nom de CPM 2% et, comme monoglycéride, celui connu sous le nom "FEM" 90/25, ces deux produits étant commercialisés par la société DAFA.

A la différence du procédé de panification classique qui comprend une seule phase de pétrissage, le procédé suivant l'invention qui dérive du procédé américain "sponge-dough", comprend, entre les deux phases de pétrissage, un temps de repos très long, de l'ordre de 3h30 à 4h30, qui permet une formation d'arômes très intéressante pour les qualités organoleptiques du pain de mie. Il est à noter également que les temps de pétrissage, de repos, de fermentation, de cuisson, ainsi que les températures sont très différentes de ceux mis en oeuvre dans le procédé de panification classique.

Quel que soit le mode d'emballage utilisé lors de la phase finale, par exemple dans une barquette thermoformée ou plus traditionnellement dans un sachet constitué du même matériau que la barquette, on obtient, grâce à la mise en oeuvre du procédé suivant l'invention, un pain qui, 5 ou 6 semaines après la fabrication, est pratiquement aussi moëlleux que la meilleure catégorie des pains actuellement commercialisés et qui ont une durée de vie de l'ordre de 15 jours. Pair ailleurs cette caractéristique de moelleux est obtenue sans utilisation d'un quelconque conservateur chimique, tel que le propionate de calcium, qui perturbe les fermentations panaires et apporte des flaveurs désagréables.

**Revendications**

1. Procédé de fabrication d'un pain de mie préemballé de longue conservation dans lequel on utilise le procédé américain de panification appelé "sponge-dough" dans lequel on part d'un mélange comprenant principalement de la farine, de l'eau, de la levure, du sucre, du sel, des matières grasses et on procède à deux pétrissages successifs séparés, par un temps de repos de la pâte de plusieurs heures, caractérisé en ce qu'on ajoute au mélange de départ, avant ou au cours de la première phase de pétrissage, du gluten et un émulsifiant puis on ajoute à la pâte, au cours de la seconde phase de pétrissage, un monoglycéride.

2. Procédé suivant la revendication 1 caractérisé en ce qu'on utilise un mélange de formule

| | |
|---|---|
| Farine | 100 kg |
| Gluten | 4 à 5 kg |
| Eau | 60 à 65 l |
| Levure | 3,5 à 5 kg |
| Saccharose | 6 à 7 kg |
| Mat. Grasses | 3 kg |
| Sel | 2 kg |
| Emulsifiant | 1 à 2 kg |
| Monoglycéride | 1 à 2 kg |
| Lactosérum | env. 3 kg |
| Acide ascorbique | 0,0015 à 0,030 kg |

3. Procédé suivant la revendication 2 caractérisé en ce qu'on part d'un mélange comprenant de 60 à 70% du poids de la farine, du gluten et de l'eau, et la totalité de la levure et de l'émulsifant, on pétrit ce mélange pendant une durée d'environ 6 min avec une température de la pâte de l'ordre de 24°C, on laisse ensuite reposer la pâte dans des bacs, pendant une période allant de 3h30 à 4h30, à une température d'environ 25°C, on reprend ensuite la pâte dans le pétrin et on lui ajoute le reste des constituants de la formule sauf le sel qui est incorporé en fin de pétrissage, la durée de ce second pétrissage étant de 6 à 8 min et la température de la pâte étant d'environ 26 à 28°C.

4. Procédé suivant la revendication 3 caractérisé en ce qu'on laisse ensuite la pâte reposer en cuve pendant une période de 10 à 12 min, on procède ensuite au divisage, au pesage et au boulage, on place ensuite la pâte mise en boule dans une chambre de préfermentation dans laquelle on la laisse pendant 10 min à une température de 30°C et avec un taux d'humidité de 80 à 85%, on façonne la pâte préfermentée, on la met en moule et on la fait passer dans une étuve finale pendant une période de 45 à 55 min, à une température de 37 à 40°C et avec un taux d'humidité de 80 à 85%, on procède ensuite à la cuisson dans un four pendant 20 min environ à une température allant de 220 à 240°C et on démoule.

## Patentansprüche

1. Verfahren zur Herstellung eines vorgepackten, lagerfähigen Krumenbrotes unter Anwendung des amerikanischen, als "sponge-dough" bezeichneten Verfahrens der Brotherstellung, bei dem man von einer Mischung ausgeht, die hauptsächlich Mehl, Wasser, Hefe, Zucker, Salz und Fettstoffe enthält, die man zwei aufeinanderfolgenden Knetvorgänge unterwirft, die durch eine mehrere Stunden dauernden Ruhepause für den Teig getrennt sind, dadurch gekennzeichnet, daß man der Ausgangsmischung vor oder während der ersten Knetphase Gluten und ein Emulgator und dann während der zweiten Knetphase ein Monoglycerid zugibt.

2. Verfahren nach Anspruch 1, dadurch gekennzeichnet, daß man eine Mischung mit folgender Zusammensetzung benutzt;

| Mehl | 100 kg |
| Gluten | 4 bis 5 kg |
| Wasser | 60 bis 65 l |
| Hefe | 3,5 bis 5 kg |
| Saccharose | 6 bis 7 kg |
| Fettstoffe | 3 kg |
| Salz | 2 kg |
| Emulgator | 1 bis 2 kg |
| Monoglycerid | 1 bis 2 kg |
| Lactoserum | etwa 3 kg |
| Ascorbinsäure | 0,0015 bis 0,030 kg |

3. Verfahren nach Anspruch 2, dadurch gekennzeichnet, daß man von einer Mischung ausgeht, die 60 bis 70 Gewichtsprozente des Mehls, Glutens und Wassers, sowie die Gesamtmege der Hefe und des Emulgators enthält, daß man diese Mischung für die Dauer von etwa 60 Minuten mit einer Teigtemperatur in der Größenordnung von 24°C knetet, den Teig dann im Trog während einer Periode zwischen 3h30 und 4h30 bei einer Temperatur von etwa 25° ruhen läßt, dann den Teig im Backtrog wiederaufnimmt und ihm auf das Salz, das am Ende des Knetvorgangs zugegeben wird, alle restlichen Bestandteile nach der Rezeptur beimengt, wobei die Dauer des zweiten Knetvorgangs 6 bis 8 Minuten beträgt und die Teigtemperatur in der Größenordnung von 26 bis 28° liegt.

4. Verfahren nach Anspruch 3, dadurch gekennzeichnet, daß man dann den Teig während einer Zeitspanne von 10 bis 12 Minuten im Trog ruhen läßt, dann die Teilung, das Wiegen und das Formen von Kugeln durchführt, anschießend den zu Kugeln geformten Teig in eine Vorgärkammer verbringt, in der man ihn 10 Minuten bei einer Temperatur von 30°C bei einem Feuchtigkeitsgrad von 80 bis 85% verweilen läßt, dann den vorgegorenen Teig ausformt, ihn in Formen einbringt und ihn für eine Zeitspanne von 45 bis 55 Minuten bei einer Temperatur von 37 bis 40°C und bei einem Feuchtigkeitsgrad von 80 bis 85% ein abschießende Trockenkammer durchwandern läßt, worauf man das Backen in einem Ofen während etwa 20 Minuten und bei einer Temperatur zwischen 220 und 240°C durchführt und dann entformt.

## Claims

1. A method of fabricating a prepacked loaf of bread with long shelf life in which the American bread making method is used called "spongedough" in which a mixture is used including mainly flour, water, yeast, sugar, salt, fats and two successive kneadings are carried out separated by a rest time for the dough of several hours, characterized in that gluten and an emulsifier are added to the starting mixture before or during the first kneading phase, and a monoglyceride is added to the dough during the second kneading phase.

2. A method according to claim 1, characterized the formula of the mixture used is the following:

| | |
|---|---|
| Flour | 100 Kg |
| Gluten | 4 to 5 Kg |
| Water | 60 to 65 liters |
| Yeast | 3.5 to 5 Kg |
| Saccharose | 6 to 7 Kg |
| Fat | 3 Kg |
| Salt | 2 Kg |
| Emulsifier | 1 to 2 Kg |
| Monoglyceride | 1 to 2 Kg |
| Lactoserum | about 3 Kg |
| Ascorbic acid | 0.0015 to 0.030 Kg |

3. A method according to claim 2, characterized in that it comprises the steps consisting in obtaining a mixture including 60 to 70% by weight of flour, gluten and water and the whole of the yeast and the emulsifier, kneading this mixture for about 60 minutes with a temperature of the dough of the order of 24°C, then lefting the dough to rest in tanks, for a period from three and a half to four and a half hours, in the bread making room at a temperature of about 25°C, then taking up the dough in the kneader and adding the rest of the constituents of the formula except the salt which is incorporated at the end of kneading so as not to slow down the activity of the yeast, the duration of this second kneading being from 6 to 8 minutes and the temeprature of the dough being about 26 to 28°C.

4. A method according to claim 3, characterized it further comprising the steps consisting in lefting the dough to rest in a tank for a period of 10 to 12 minutes, then dividing up, weighing and making it into balls, then placing the dough made into balls in a prefermentation chamber in which it is left for ten minutes at a temperature of 30°C and with a humidity rate of 80 to 85%, shaping the prefermented dough, putting it in a mold and passing it into a final drying oven for 45 to 55 minutes at a temperature of 37 to 40°C and with a humidity rate of 80 to 85%, then baking it in an oven for about 20 minutes at a temperature going from 220 to 240°C and removing it from the mold.

5